# EUROPÄISCHE PATENTSCHRIFT

(11) **EP 0 483 630 B1**
(45) Veröffentlichungstag und Bekanntmachung des Hinweises auf die Patenterteilung: **01.02.1995**
(21) Anmeldenummer: 91117895.2
(22) Anmeldetag: 21.10.1991
(51) Int. Cl.: F16G 3/00

(54) **Notverbindung für Stahlseil-Fördergurte**
Emergency joining for steel cable conveyor belts
Jonction de secours pour courroies transporteuses à câbles d'acier

(30) Priorität: 27.10.1990 DE 4034222
(43) Veröffentlichungstag der Anmeldung: 06.05.1992
(73) Patentinhaber: Continental Aktiengesellschaft, 30165 Hannover (DE)
(72) Erfinder: Flebbe, Heinrich, Dr., W-3016 Velber (DE)

(56) Entgegenhaltungen:
- DE-A- 2 359 712
- DE-B- 1 101 062

## Beschreibung

Die Erfindung betrifft eine Vorrichtung zum Endlosverbinden der beiden Enden eines Stahlseilfördergurtes durch zugfeste Koppelung der gegenüberliegenden Stahlseilendabschnitte, deren freie Enden verdickt ausgebildet sind.

Stahlseilfördergurte haben sich auch in Produktionsprozessen der Automobilindustrie durchgesetzt. In diesen Produktionsprozessen sind mehrere Förderstrecken aufeinander abgestimmt, so daß die endlosen Fördergurte mit quasi fixen Achsabständen laufen müssen.

Bisherige Praxis ist, nach einem Bruch eines Stahlseilfördergurtes durch überlappen der Gurtenden und Ineinanderlegen der freigelegten Stahlseilendabschnitte und nach Auflegen von Gummideckplatten die Stahlseilgurtverbindung durch Vulkanisieren herzustellen. Der Geräte- und Zeitaufwand zum Herstellen einer derartigen Stahlseilgurtverbindung ist hoch. Der Produktionsprozeß bzw. Förderprozeß ist in dieser Zeit unterbrochen. Dazu kommt, daß durch die Überlappung Länge des Stahlseilfördergurtes verlorengeht, so daß bei dem Erfordernis der quasi fixen Achsabstände ein anderer Stahlseilfördergurt aufgezogen werden muß. Beides führt zu einer geringeren Verfügbarkeit der Förderanlage.

Der Erfindung liegt die Aufgabe zugrunde, eine Vorrichtung der eingangs geschilderten Art zu schaffen, mit der eine Endlosverbindung eines Stahlseilfördergurtes in geringerer Zeit geschaffen werden kann, wobei diese Verbindung am Ort der Förderstrecke mit einfachen technischen Mitteln realisiert werden kann, wobei die hergestellte Endlosverbindung an der Kraftübertragung zwischen Antriebstrommel und Stahlseilfördergurt weiterhin teilnimmt.

Die Aufgabe wird erfindungsgemäß durch die im Kennzeichen des Anspruchs 1 genannten Merkmale gelöst. Die Vorrichtung wird zwischen die freien Seilenden eingebracht und überbrückt die durch die Bruchzone entstandene Fehllänge, so daß die für die quasi fixen Achsabstände notwendige Länge des Fördergurtes erhalten bleibt. Die Vorrichtung kann an der Förderanlage selbst mit einfachen technischen Mitteln erzielt werden, da eine Vulkanisation der Verbindungsstelle entfällt.

Nach dem Einführen der freien Stahlseilendabschnitte in die Anschlagstücke werden die freien Enden der Seilendabschnitte durch eine Verdickung gesichert. Diese kann mit einfachen technischen Mitteln, z.B. Aufspleißen oder anderem hergestellt werden. Die Anschlagstücke sind bereits vor der Anlieferung in einer Werkstatt über die Seilabschnitte miteinander verbunden. Nach dem Verbinden der Seilendabschnitte mit den Anschlagstücken wird das Zwischenstück zwischen die noch nicht gespannten, separaten Seilabschnitte eingesetzt und fixiert diese nach dem Spannen des Fördergurtes. Aufgrund der reibfähigen Ausbildung der den Trommeloberflächen zugewandten Flächen tragen die Anschlagstücke und das Zwischenstück durch den auftretenden Reibschluß zur Kraftübertragung bei.

In vorteilhafter Ausgestaltung der Erfindung besteht jede Verdickung aus mehreren verformbaren, auf die über das Anschlagstück hinausragenden Stahlseilenden aufgepreßten kurzen Hülsen. Die Verbindung zwischen Anschlagstücken und Stahlseilendabschnitten jedes Gurtendes kann so mit einfachen Handwerkzeugen am Ort der zu reparierenden Förderstrecke hergestellt werden. Der Kraftaufwand für das Aufbringen von einzelnen kurzen Hülsen ist geringer. Die kurzen Hülsen lassen sich platzsparend montieren.

In weiterer vorteilhafter Ausgestaltung der Erfindung sind die Hülsen aus metallischem Werkstoff. Dieses ermöglicht eine gute Verformbarkeit der Hülsen mit dem Vorteil der festen Verklammerung an den Stahlseilendabschnitten.

Eine weitere vorteilhafte Ausgestaltung wird durch die Merkmale im Kennzeichen des Anspruchs 4 offenbart. Die langen Hülsen stellen eine platzsparende Sicherung der Anschlagstücke dar, die ohne großen Aufwand mit üblichen Werkstattmitteln erzielt werden kann, wobei eine gute Festigkeit der Hülsenanordnung gewährleistet ist.

Werden gemäß Anspruch 5 in der Strecke zwischen den beiden Anschlagstücken mehrere Zwischenstücke eingesetzt, können längere Bruchzonen des Stahlseilfördergurtes abgedeckt werden.

Weist das Zwischenstück an den Längsseiten die Stahlseilabschnitte aufnehmende Nuten auf, so ist das Zwischenstück nach der Montage schnell nachträglich einsetzbar. Die vorhergehende Montage wird aber durch das Zwischenstück nicht behindert.

Die vorteilhafte Ausgestaltung gemäß Anspruch 7 führt zu einer einfachen Realisierung der kraftschlüssigen Koppelung des Zwischenstückes mit den parallelen, separaten Stahlseilabschnitten. Dadurch sind keine zusätzlichen Montagemaßnahmen am Reparaturort notwendig.

Weitere vorteilhafte Ausgestaltungen der Erfindung werden in den Unteransprüchen 8 und 9 gekennzeichnet.

Die Erfindung betrifft auch ein Verfahren zur Verbindung der beiden Enden eines gebrochenen Stahlseilfördergurtes unter Verwendung einer Vorrichtung nach Anspruch 1. Dieses Verfahren wird durch die Merkmale des Anspruchs 10 gekennzeichnet.

Werden gemäß Anspruch 11 nach dem Freischneiden der Drahtseilendabschnitte die beiden Randseile jedes Gurtendes gekappt, kann vermieden werden, daß die Breite der Notverbindung die Breite des Stahlseilfördergurtes überschreitet. Auf diese Weise ist es möglich, die hergestellte Endlosverbindung der Stahlseilfördergurtbreite sinnvoll anzupassen.

Durch die Erfindung ist es möglich, eine im Produktionsprozeß dringend benötigte Förderanlage innerhalb kürzester Zeit nach einem etwaigen Gurtbruch schnell und einfach mit einer Notverbindung zu versehen, so daß der Produktions- bzw. Förderprozeß bis zu einer geplanten Produktionspause weiter betrieben werden kann.

Anhand der Zeichnung wird nachstehend ein Ausführungsbeispiel der Erfindung näher erläutert. Es zeigt
- Fig. 1: eine Notverbindung für die beiden Enden eines Stahlseilfördergurtes in Seitenansicht;
- Fig. 2: eine Draufsicht der Notverbindung gemäß Fig. 1;
- Fig. 3: einen Querschnitt durch das Mittelstück der Notverbindung gemäß Linie III-III.

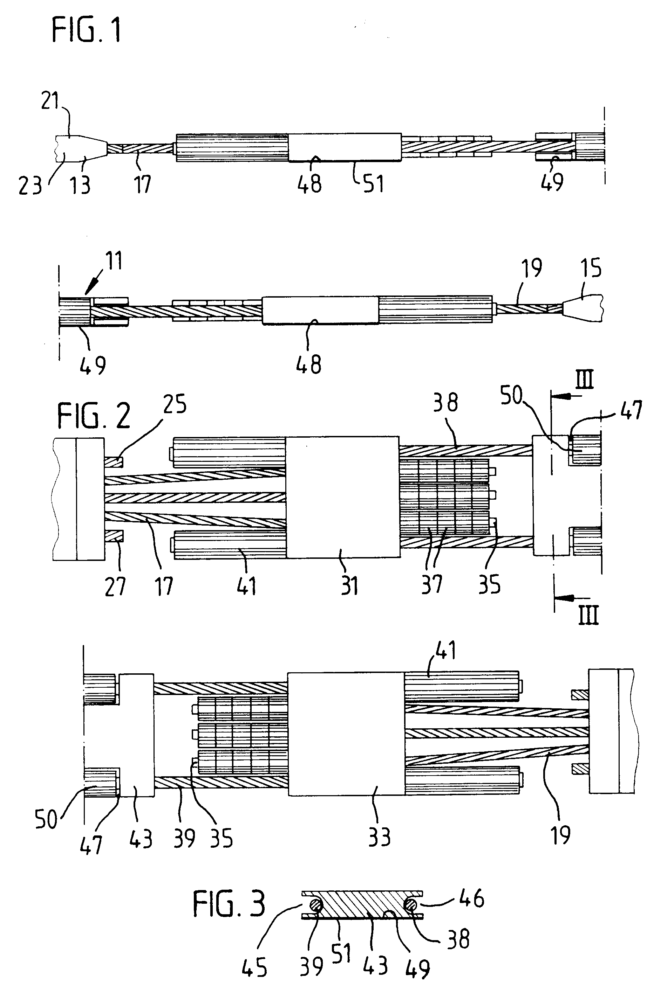

Von einem Stahlseilfördergurt sind in den Fig. 1 und 2 die beiden, über eine Notverbindung 11 miteinander gekoppelten Gurtenden 13 und 15 dargestellt. Die Stahlseilendabschnitte 17; 19 jedes Gurtendes 13 bzw. 15 sind durch Entfernen der Gummideckplatten 21 bzw. 23 und Ausschneiden des zwischen den Stahlseilendabschnitten 17, 19 liegenden Gummis freigelegt. Die beiden Randseile 25, 27 sind gekappt. Die restlichen Stahlseilendabschnitte 17; 19 sind längengleich geschnitten und durch Bohrungen eines quaderförmigen Anschlagstückes 31 bzw. 33 geführt. Auf die überstehenden Seilenden 35 sind mehrere kurze Preßhülsen 37 fest aufgepreßt, deren Außendurchmesser größer sind als der Innendurchmesser der jeweiligen Bohrung der Anschlagstücke 31, 33.

Die beiden Anschlagstücke 31 und 33 sind über zwei parallele, separate äußere Seilabschnitte 38 und 39 miteinander gekoppelt. Die Enden dieser Seilabschnitte 38, 39 durchdringen die Anschlagstücke 31, 33 ebenfalls durch eingebrachte Längsbohrungen. Die über das jeweilige Anschlagstück 31 bzw. 33 hinausragenden Enden der Seilabschnitte 38, 39 sind durch aufgepreßte lange Aluminiumhülsen 41 gesichert.

In der Streckenmitte zwischen den beiden Anschlagstücken 31 und 33 ist ein Zwischenstück 43 zwischen die Seilabschnitte 38 und 39 eingesetzt, das an seinen Längsseiten jeweils eine Nut 45, 46 aufweist, mit deren Hilfe die Seilabschnitte 38, 39 beim Trommelumlauf auf vorbestimmte Distanz zum Trommelradius gehalten werden. Das Zwischenstück 43 weist längsseitig Ausnehmungen 47 auf, in denen Preßhülsen 50 liegen, die auf die Stahlseilabschnitte 38, 39 aufgepreßt sind.

Die mit den Oberflächen der Antriebs- und Umlenktrommeln in Kontakt kommenden Flächen 48; 49 der Anschlagstücke 31, 33 und des Mittelstückes 43 sind mit einer Gummischicht 51 versehen.

Die Wirkungsweise der vorstehend beschriebenen Vorrichtung ist wie folgt.

Das gesamte Koppelstück 11 wird außerhalb des Förderbereiches in einer Werkstatt vormontiert. Vor Ort werden die Anschlagstücke 31, 33 mit den freigelegten Stahlseilendabschnitten 17, 19 jedes Gurtendes 13, 15 kraftschlüssig verbunden. Dabei werden die Stahlseilendabschnitte 17, 19 durch die Bohrungen der Anschlagstücke 31, 33 geschoben. Auf die überstehenden Seilenden 35 werden die Preßhülsen 37 fest mit einem entsprechenden Werkzeug, z.B. einer Preßzange, aufgebracht. Zwischen die Seilabschnitte 38, 39 wird das Zwischenstück 43 eingesetzt. Nach dem Spannen des nun wieder endlosen Fördergurtes kann der Förderprozeß wieder aufgenommen werden. Der fixe Achsabstand der Förderstrecke brauchte nicht verändert zu werden.

## Patentansprüche

1. Vorrichtung zum Endlosverbinden der beiden Enden eines Stahlseilfördergurtes durch zugfeste Koppelung der gegenüberliegenden Stahlseilendabschnitte, deren freie Enden verdickt ausgebildet sind,
**gekennzeichnet** durch folgende Merkmale:
- die Stahlseilendabschnitte (17 bzw. 19) jedes Gurtendes (13 bzw. 15) durchdringen Bohrungen eines Anschlagstückes (31 bzw. 33) und sind außerhalb des jeweiligen Anschlagstückes am freien Ende mit einer Verdickung (37) versehen, die größer als die Bohrungsdurchmesser sind,
- die beiden Anschlagstücke (31 und 33) sind über separate Stahlseilabschnitte (38, 39) miteinander zugfest verbunden,
- in der Strecke zwischen den Anschlagstücken (31, 33) ist zwischen die Stahlseilabschnitte (38, 39) ein vor der Wiederinbetriebnahme des Stahlseilfördergurtes einsetzbares Zwischenstück (43) angeordnet,
- das Zwischenstück (43) ist mit den Stahlseilabschnitten (38, 39) kraftschlüssig gekoppelt,
- die den Oberflächen der Spann- und Antriebstrommeln zugewandten Flächen (48, 49) der Anschlagstücke (31, 33) und des Zwischenstückes (43) sind mit einem reibungserhöhenden Werkstoff (51) versehen.

2. Vorrichtung nach Anspruch 1, dadurch gekennzeichnet, daß jede Verdickung (37) aus mehreren verformbaren, auf die über das Anschlagstück (31, 33) hinausragenden Stahlseilenden (35) aufgepreßten kurzen Hülsen besteht.

3. Vorrichtung nach Anspruch 2, dadurch gekennzeichnet, daß die Hülsen (37) aus metallischem Werkstoff sind.

4. Vorrichtung nach Anspruch 1, dadurch gekennzeichnet, daß die separaten Stahlseilabschnitte (38, 39) durch Bohrungen der Anschlagstücke (31, 33) geführt sind und am hinausragenden Ende eine aufgepreßte lange Hülse (41) mit größerem Außendurchmesser als dem der Bohrung aufweisen.

5. Vorrichtung nach Anspruch 1 oder 4, dadurch gekennzeichnet, daß in der Strecke zwischen den beiden Anschlagstücken (31, 33) mehrere Zwischenstücke (43) eingesetzt sind.

6. Vorrichtung nach Anspruch 1 oder 5, dadurch gekennzeichnet, daß das Zwischenstück (43) an den Längsseiten die Stahlseilabschnitte (38, 39) aufnehmende Nuten (45, 46) aufweist.

7. Vorrichtung nach Anspruch 1, 5 oder 6, dadurch gekennzeichnet, daß das Zwischenstück (43) längsseitig mittlere Ausnehmungen (47) aufweist, in dem der jeweilige Stahlseilabschnitt (38, 39) mit einer stationären Verdickung (50) freiliegt.

8. Vorrichtung nach Anspruch 7, dadurch gekennzeichnet, daß die Verdickung (50) eine aufgepreßte Hülse aus metallischem Werkstoff ist.

9. Vorrichtung nach Anspruch 1, dadurch gekennzeichnet, daß der reibungserhöhende Werkstoff Gummi ist.

10. Verfahren zur Verbindung der beiden Enden eines gebrochenen Stahlseilfördergurtes einer Förderstrecke unter Verwendung einer Vorrichtung nach Anspruch 1,
**dadurch gekennzeichnet,**
daß man
- die Spanntrommel der Förderstrecke zurückfährt,
- die Deckplatten der Gurtenden beidseitig auf eine ausreichende Länge entfernt,
- die Stahlseilendabschnitte (17, 19) durch Freischneiden des Gummis freilegt,
- die freiliegenden Stahlseilendabschnitte längengleich schneidet,
- die Anschlagstücke (31, 33) auf die Stahlseilendabschnitte schiebt,
- die über das jeweilige Anschlagstück hinausragenden freien Enden der Stahlseilendabschnitte mit aufgesetzten kurzen Hülsen (50) versieht und diese aufpreßt,
- das Zwischenstück (43) zwischen die parallelen separaten Seilabschnitte einsetzt,
- über das Verfahren der Spanntrommel den Fördergurt spannt.

11. Verfahren nach Anspruch 10, dadurch gekennzeichnet, daß man nach dem Freischneiden der Stahlseilendabschnitte die beiden Randseile jedes Gurtendes kappt.

## Claims

1. Device for the endless connection of the two ends of a steel cable conveyor belt by a substantially inextensible interconnection of the oppositely situated steel cable end portions, the free ends of which have a thickened configuration, characterised by the following features:
- the steel cable end portions (17 and 19 respectively) of each belt end (13 or 15 respectively) extend through bores in a stop member (31 or 33 respectively) and are provided with a thickened portion (37) at the free end externally of the respective stop member, such thickened portions being greater than the bore diameters,
- the two stop members (31 and 33) are substantially inextensibly interconnected via separate steel cable portions (38, 39),
- an intermediate member (43), which is insertable prior to the steel cable conveyor belt resuming operation, is disposed between the steel cable portions (38, 39) in the path between the stop members (31, 33),
- the intermediate member (43) is connected to the steel cable portions (38, 39) in a force-locking manner,
- the faces (48, 49) of the stop members (31, 33) and of the intermediate member (43), facing the surfaces of the tensioning and driving drums, are provided with a friction-increasing material (51).

2. Device according to claim 1, characterised in that each thickened portion (37) comprises a plurality of deformable, short sleeves, which are pressed onto the steel cable ends (35) protruding beyond the stop member (31, 33).

3. Device according to claim 2, characterised in that the sleeves (37) are formed from metallic material.

4. Device according to claim 1, characterised in that the separate steel cable portions (38, 39) extend through bores in the stop members (31, 33) and have, at the protruding end, a pressed-on, long sleeve (41) having a greater outer diameter than that of the bore.

5. Device according to claim 1 or 4, characterised in that a plurality of intermediate members (43) are inserted in the path between the two stop members (31, 33).

6. Device according to claim 1 or 5, characterised in that the intermediate member (43) is provided, on its longitudinal sides, with grooves (45, 46) which accommodate the steel cable portions (38, 39).

7. Device according to claim 1, 5 or 6, characterised in that the intermediate member (43) has recesses (47), which are disposed in the centre of the longitudinal sides, and in which the respective steel cable portion (38, 39) is covered with a thickened portion (50).

8. Device according to claim 7, characterised in that the thickened portion (50) is a pressed-on sleeve formed from metallic material.

9. Device according to claim 1, characterised in that the friction-increasing material is rubber.

10. Method of connecting the two ends of a broken steel cable conveyor belt of a conveyor path by utilising a device according to claim 1, characterised in that
- the operation of the tensioning drum of the conveyor path is withdrawn,
- the cover plates of the belt ends are removed from both sides over an adequate length,
- the steel cable end portions (17, 19) are exposed as a result of the rubber being cut open,
- the exposed steel cable end portions are cut to equal lengths,
- the stop members (31, 33) are slid over the steel cable end portions,
- the free ends of the steel cable end portions, which protrude beyond the respective stop member, are provided with additional short sleeves (50), and said sleeves are pressed-on,
- the intermediate member (43) is inserted between the parallel, separate cable portions,
- the conveyor belt is tensioned by the operation of the tensioning drum.

11. Method according to claim 10, characterised in that the two edge cables of each belt end are trimmed after the steel cable end portions have been cut open.

## Revendications

1. Dispositif destiné à relier sans fin les deux extrémités d' une courroie transporteuse à câble d'acier, par accouplement résistant à la traction des portions terminales se faisant face du câble d'acier, dont les extrémités libres sont surépaissies,
caractérisé par les caractéristiques suivantes :
- les portions termina les (17 ou 19) du câble d'acier de chaque extrémité de courroie (13 ou 15) traversent des perçages pratiqués dans une pièce de butée (31 ou 33) et sont pourvues, à l'extérieur de la pièce de butée respective, à l'extrémité libre, d'une surépaisseur (37), qui est supérieure au diamètre du perçage,
- les deux pièces de butée (31 et 33) sont reliées entre elles de manière résistant à la traction, par des portions de câble d'acier (38, 39) séparées,
- dans le parcours séparant les pièces de butée (31, 33), il est placé entre les portions de câble d'acier (38, 39) une pièce intermédiaire à insérer avant la remise en service de la courroie transporteuse à câble d'acier,
- la pièce intermédiaire (43) est accouplée par force avec les portions de câble d'acier (38, 39),
- les surfaces (48, 49), tournées vers les surfaces des tambours de tension et d'entraînement, des pièces de butée (31, 33) et de la pièce intermédiaire (43), sont pourvues d'un matériau (51) augmentant la friction.

2. Dispositif selon la revendication 1, caractérisé en ce que chaque surépaisseur (37) est constituée de plusieurs douilles courtes déformables, pressées sur les extrémités (35) du câble d'acier, dépassant de la pièce de butée (31, 33).

3. Dispositif selon la revendication 2, caractérisé en ce que les douilles (37) sont faites d'un matériau métallique.

4. Dispositif selon la revendication 1, caractérisé en ce que les portions de câble d'acier (38, 39) séparées passent à travers des percages des pièces de butée (31, 33) et présentent une longue douille (41), pressée à l'extrémité dépassante, de diamètre extérieur plus grand que celui du perçage.

5. Dispositif selon les revendications 1 ou 4, caractérisé en ce que dans le parcours entre les deux pièces de butée (31, 33) sont placées plusieurs pièces intermédiaires (43).

6. Dispositif selon les revendications 1 ou 5, caractérisé en ce que la pièce intermédiaire (43) présente sur ses grands côtés, des rainures (45, 46) logeant les portions de câble d'acier (38, 39).

7. Dispositif selon les revendications 1, 5 ou 6, caractérisé en ce que la pièce intermédiaire (43) présente sur les grands côtés des évidements (47) centraux, dans chacun desquels repose librement la portion de câble d'acier (38, 39) respective avec une surépaisseur (50) fixe.

8. Dispositif selon la revendication 7, caractérisé en ce que la surépaisseur (50) est une douille en métal pressée dessus.

9. Dispositif selon la revendication 1, caractérisé en ce que le matériau augmentant la friction est du caoutchouc.

10. Procédé destiné à relier les deux extrémités d'une courroie transporteuse à câble d'acier rompue d'une chaîne de manutention, par utilisation d'un dispositif selon la revendication 1,
caractérisé en ce qu'on
- fait reculer le tambour de tension de la ligne de transport,
- dépose les plaques de couverture des extrémités de la courroie, des deux côtés, sur une longueur suffisante,
- dénude les portions d'extrémité du câble d'acier (17, 19) en découpant le caoutchouc,
- coupe à même longueur les portions terminales de câble d'acier dénudées,
- pousse les pièces de butée (31, 33) sur les portions d'extrémité du câble d'acier,
- équipe les extrémités libres, dépassant de la pièce de butée respective, des portions d'extrémité du câble d'acier, de douilles (50) courtes placées dessus et on les presse,
- insère la pièce intermédiaire (43) entre les portions de câble séparées, parallèles,
- tend la courroie transporteuse en déplaçant le tambour de tension.

11. Procédé selon la revendication 10, caractérisé en ce qu'après avoir découpé les portions d'extrémité du câble d'acier, on raccourcit les deux câbles de bordure de chaque extrémité de courroie.
